# EUROPÄISCHE PATENTANMELDUNG

(11) **EP 2 607 171 A2**
(43) Veröffentlichungstag der Anmeldung: **26.06.2013**
(21) Anmeldenummer: 12007840.7
(22) Anmeldetag: 21.11.2012
(51) Int. Cl.: B60Q 9/00

(54) **Verfahren zur Ansteuerung einer Anzeigeeinrichtung eines Kraftfahrzeugs, und Kraftfahrzeug mit einer so angesteuerten Anzeigeeinrichtung**

(30) Priorität: 20.12.2011 DE 102011121616
(71) Anmelder: AUDI AG, 85045 Ingolstadt (DE)
(72) Erfinder: Giesler, Björn, 85055 Ingolstadt (DE); Heinemann, Patrick, 85092 Kösching (DE); Schadeck, Michael, 85057 Ingolstadt (DE); Stümper, Stefan, 85072 Eichstätt (DE)
(74) Vertreter: Thielmann, Frank

(57) **Zusammenfassung**

Verfahren zur Ansteuerung einer Anzeigeeinrichtung (2) eines Kraftfahrzeugs (1) zur Anzeige einer auf die Umgebung des Kraftfahrzeugs (1) bezogenen Umgebungsinformation, wobei der Umgebungsinformation wenigstens eine eine Erfassungsrichtung einer zur Ermittlung der Umgebungsinformation genutzten Erfassungseinrichtung (10) oder eine Richtung (14) zu einem von der Umgebungsinformation beschriebenen Objekt (13) ausgehend von einem Bezugspunkt, insbesondere einer Sitzposition eines Fahrers, innerhalb des Kraftfahrzeugs (1) beschreibende Richtungsinformation zugeordnet wird, wobei die wenigstens einen in einer horizontalen Ebene liegenden Winkelbereich abdeckende Anzeigeeinrichtung (2) zur Darstellung der Umgebungsinformation in einem der Richtungsinformation zugeordneten Unterbereich (15) des Winkelbereichs angesteuert wird.

## Beschreibung

Die Erfindung betrifft ein Verfahren zur Ansteuerung einer Anzeigeeinrichtung eines Kraftfahrzeugs zur Anzeige einer auf die Umgebung des Kraftfahrzeugs bezogenen Umgebungsinformation, sowie ein dazu ausgebildetes Kraftfahrzeug.

Moderne Kraftfahrzeuge weisen eine Vielzahl von unterschiedlich ausgebildeten Fahrerassistenzsystemen auf. Diese können beispielsweise als Einparkhilfen, Fußgängerschutzsysteme, Totwinkelassistenten oder Notbremsassistenten ausgebildet sein. Dabei ist typischerweise zumindest eine Erfassungseinrichtung vorgesehen, die Umgebungsinformationen aus der Umgebung des Kraftfahrzeugs erfasst. Die eine Umfeldsensorik des Kraftfahrzeugs darstellenden Erfassungseinrichtungen sind beispielsweise als Ultraschall-, Radar-, Lidar-Sensoren oder optische Sensoren ausgebildet. Die zumindest eine vorgesehene Erfassungseinrichtung steht in einer Wirkverbindung mit einem Steuergerät, mittels dessen die erfassten Umgebungsinformationen auswertbar sind. Dazu kann insbesondere eine entsprechende Software vorgesehen sein, die eine Bilderkennung ermöglicht, so dass insbesondere in der Umgebung des Kraftfahrzeugs befindliche Objekte erkennbar und identifizierbar sind. Dies ermöglicht die Beurteilung einer Fahrsituation des Kraftfahrzeugs, welche insbesondere das frühzeitige Erkennen einer vorliegenden Kollisionsgefahr beinhaltet.

Bei der Einparkhilfe wird ein rückwärtiger Bereich des Kraftfahrzeugs insbesondere optisch erfasst. Anhand der erfassten Umgebungsinformationen werden mittels des Steuergeräts automatisch Stelleingriffe, insbesondere zur Veränderung eines Gierwinkels des Kraftfahrzeugs automatisch angepasst. Zur Information eines Fahrers des Kraftfahrzeugs wird die den rückwärtigen Kraftfahrzeugbereich beschreibende Umgebungsinformation auf einer zentralen Anzeigeeinrichtung, welche insbesondere in einer Instrumententafel des Kraftfahrzeugs integriert sein kann, angezeigt.

Bei Fußgängerschutzsystemen wird die Umgebung des Kraftfahrzeugs mittels der zumindest einen Erfassungseinrichtung überwacht und die dabei erfassten Daten dahingehend ausgewertet, ob eine mögliche Kollision mit einem Fußgänger bevorsteht. Das Steuergerät des Fahrerassistenzsystems wertet die Umgebungsinformation aus und gibt, falls ein Fußgänger in der Umgebung des Kraftfahrzeugs ermittelt worden ist, beispielsweise ein abstrahiertes Warnsymbol und/oder eine akustische Warnung auf der zentralen Anzeigeeinrichtung aus.

Beim Totwinkelassistenten werden Bereiche der Umgebung des Kraftfahrzeugs erfasst, die vom Fahrer des Kraftfahrzeugs nicht eingesehen werden können. Insbesondere sind dies Winkelbereiche, die bezüglich einer Sitzposition des Fahrers von einer Säule es Kraftfahrzeugs verdeckt sind. Zur Vermeidung von Unfällen und Kollisionen werden die Umgebungsinformationen, die zu den verdeckten Winkelbereichen korrespondieren, auf der Anzeigeeinrichtung ausgegeben.

Ausgehend von diesem Stand der Technik ist es Aufgabe der vorliegenden Erfindung, ein verbessertes Verfahren zur Ansteuerung der Anzeigeeinrichtung anzugeben, so dass die gezeigte Umgebungsinformation besonders intuitiv erfassbar ist.

Zur Lösung der Aufgabe wird bei einem Verfahren der eingangs genannten Art erfindungsgemäß der Umgebungsinformation wenigstens eine eine Erfassungsrichtung einer zur Ermittlung der Umgebungsinformation genutzten Erfassungseinrichtung oder eine Richtung zu einem von der Umgebungsinformation beschriebenen Objekt ausgehend von einem Bezugspunkt, insbesondere einer Sitzposition eines Fahrers, innerhalb des Kraftfahrzeugs beschreibende Richtungsinformation zugeordnet, wobei die wenigstens einen in einer horizontalen Ebene liegenden Winkelbereich abdeckende Anzeigeeinrichtung zur Darstellung der Umgebungsinformation in einem der Richtungsinformation zugeordneten Unterbereich des Winkelbereichs angesteuert wird.

Die Anzeigeeinrichtung ist fahrzeuginnenseitig und eine Fahrgastzelle zumindest teilweise randseitig umlaufend angeordnet. Die Umgebungsinformation wird auf der Anzeigeeinrichtung an einer Stelle, die dem Unterbereich entspricht, dargestellt, so dass die dazu zugeordnete Richtungsinformation vom Fahrer besonders leicht und intuitiv erfassbar ist. Dies ist durch die Ausdehnung der Anzeigeeinrichtung über den in der horizontalen Ebene liegenden Winkelbereich ermöglicht. Wird beispielsweise eine drohende Kollisionsgefahr erkannt, die sich bezüglich der Sitzposition des Fahrers dem Kraftfahrzeug aus der Richtung nähert, so wird zur Anzeige der Gefahr die Anzeigeeinrichtung in dem der Richtungsinformation zugeordneten Unterbereich angesteuert. Bei der Bestimmung der Richtungsinformation kann insbesondere die Erfassungsrichtung der als optischer Sensor oder Kamera ausgebildeten Erfassungseinrichtung genutzt werden. Alternativ dazu ist vorgesehen, die Richtung anhand der die Umgebung des Kraftfahrzeugs beschreibenden Umgebungsinformation beispielsweise mittels einer Bilderkennung zu ermitteln. Befindet sich beispielsweise das von der Umgebungsinformation beschriebene Objekt auf einen die Richtungsinformation definierenden Kollisionskurs mit dem Kraftfahrzeug, so wird die Anzeigeeinrichtung derart angesteuert, dass die Darstellung der Umgebungsinformation in dem der Richtungsinformation zugeordneten Unterbereich der Anzeigeeinrichtung erfolgt.

Das erfindungsgemäße Verfahren ist besonders dazu geeignet, in einem Fahrerassistenzsystem des Kraftfahrzeugs implementiert zu werden. Dazu kommen insbesondere Einparkhilfen, Fußgängerschutzsysteme und/oder Totwinkelassistenten in Betracht.

Besonders bevorzugterweise wird der Unterbereich derart gewählt, dass die Ausgabe der Umgebungsinformation unter einem Winkel erfolgt, der der Richtung des von der Umgebungsinformation beschriebenen Objekts entspricht. Damit ist der Fahrer auf besonders intuitive Weise informiert, woher eine mögliche Gefahr droht. So ist beispielsweise zum Fußgängerschutz vorgesehen, ein entsprechendes Warnsignal auf der Anzeigeeinrichtung bei möglicher Kollisionsgefahr auszugeben. Nähert sich der Fußgänger dem Kraftfahrzeug beispielsweise bezüglich der Sitzposition des Fahrers aus linksseitiger Richtung, so wird die Anzeigeeinrichtung in einem dazu korrespondierenden linksseitigen Bereich angesteuert. Die Umgebungsinformation wird somit derart dargestellt, dass diese vom Fahrer unter einem Winkel wahrnehmbar ist, der zu der Richtung, aus der sich der Fußgänger dem Kraftfahrzeug nähert, wahrnehmbar ist. Die zu dem Unterbereich zugeordnete Richtungsinformation ist somit für den Fahrer intuitiv leicht erfassbar, so dass er adäquat auf die Gefahrensituation reagieren kann.

In einem bevorzugten Ausführungsbeispiel der Erfindung dient als Erfassungseinrichtung eine Bildgebungseinrichtung mit einem die Erfassungsrichtung definierenden Erfassungsbereich. Die Bildgebungseinrichtung ist insbesondere als optischer Sensor ausgebildet. Als Umgebungsinformation wird das, gegebenenfalls nachbereitete, erfasste Bild im Unterbereich des Winkelbereichs ausgegeben. Insbesondere kann das nachbereitete und erfasste Bild seitlich vom Fahrer oder im rückwärtigen Fahrzeuginnenraum ausgegeben werden. Dem Fahrer wird so eine Art Rundumsicht ermöglicht, der die herkömmliche Sicht durch die Fahrzeugfenster in besonders vorteilhafter Weise erweitert. Zur Ausgabe der Umgebungsinformation kann insbesondere die gesamte Anzeigeeinrichtung genutzt werden, wobei verschiedenen Bildgebungseinrichtungen unterschiedliche Unterbereiche zugeordnet sind. Der zur Darstellung der Umgebungsinformation verwendete Unterbereich der Anzeigeeinrichtung entspricht dem Erfassungsbereich der Erfassungseinrichtung. Alternativ dazu wird in einem anderen Ausführungsbeispiel der Erfindung die als Bild ausgegebene Umgebungsinformation entsprechend skaliert, so dass der gesamte Erfassungsbereich im zugeordneten Unterbereich der Anzeigeeinrichtung dargestellt wird.

Vorteilhafterweise wird die Anzeigeeinrichtung zu einer zeitlich veränderlichen Darstellung der Umgebungsinformation angesteuert. Insbesondere ist vorgesehen, die Umgebungsinformation blinkend darzustellen, beispielsweise in Form von aufleuchtenden Warnsignalen, die leicht die Aufmerksamkeit des Fahrers auf sich ziehen. Die Anzeigeeinrichtung ist beispielsweise im Bereich einer Innenverkleidung angeordnet, die an dem zumindest einen Fahrzeugfenster, insbesondere der Windschutzscheibe, randseitig angrenzt. Die darstellte Umgebungsinformation befindet sich somit im peripheren Sichtfeld des Fahrers, in dem eine gute Wahrnehmbarkeit der dargestellten Umgebungsinformation dadurch erreicht wird, dass diese zeitlich veränderlich oder beispielsweise als animierte oder bewegte Symbole dargestellt wird. Droht insbesondere eine Kollision mit einem Fußgänger, so wird ein blinkendes und abstrahiertes Fußgängersymbol in dem der Richtungsinformation zugeordneten Unterbereich angezeigt.

Gemäß einem vorteilhaften Ausführungsbeispiel der Erfindung wird bei der das Objekt betreffenden Umgebungsinformation zusätzlich eine Entfernung des Objekts zu einer äußeren Begrenzung des Kraftfahrzeugs und/oder zu einem festen Bezugspunkt des Kraftfahrzeugs, der insbesondere durch einen Schwerpunkt des Kraftfahrzeugs definiert ist, ermittelt. Insbesondere im Rahmen einer Einparkhilfe ist es sinnvoll, die Anzeige der Umgebungsinformation in Abhängigkeit der Entfernung anzupassen, um den Fahrer über die Kritikalität der Fahrsituation zu unterrichten. Befindet sich somit beim Einparken das Objekt in der Umgebung des Kraftfahrzeugs, so wird die Anzeigeeinrichtung in dem Unterbereich, welcher zu der Richtung des Objekts bezüglich der Sitzposition des Fahrers entspricht, angesteuert. Die Ausgabe der Entfernung zum Objekt erfolgt hierbei farbcodiert. Ist beispielsweise das Objekt genügend weit vom Kraftfahrzeug entfernt, so wird im Unterbereich die zu dem Objekt korrespondierende Umgebungsinformation beispielsweise als grünes Symbol ausgegeben. Unterschreitet die Entfernung zu dem Objekt jedoch einen vorgegebenen Schwellwert, so erfolgt die Ausgabe beispielsweise in rot, um eine unmittelbar drohende Kollisionsgefahr anzuzeigen.

Insbesondere bei einem als Einparkhilfe ausgebildeten Fahrerassistenzsystem ist vorgesehen, dass die Anzeigeeinrichtung sich zumindest teilweise über die Breite der rückwärtigen Fahrgastzelle, beispielsweise an einer Heckscheibe randseitig angeordnet, erstreckt. So ist es ermöglicht, zum Einparken relevante Umgebungsinformationen im rückwärtigen Fahrzeuginnenraum auszugeben, so dass der Fahrer während des Einparkens den kraftfahrzeugrückwärtigen Bereich einsehen kann. Die rückwärtig angeordnete Anzeigeeinrichtung erweitert dabei in besonders vorteilhafter Weise den Wahrnehmungsbereich des Fahrers.

In vorteilhaften Ausgestaltungsbeispielen der Erfindung wird, insbesondere bei Erfüllung einer zusätzlichen Bedingung, ein akustisches Signal zusätzlich zu der Darstellung der Umgebungsinformation ausgegeben. Die zusätzliche Bedingung kann beispielsweise darin bestehen, dass die Entfernung des Objekts den vorgegebenen oder vorgebbaren Schwellwert unterschreitet. Insbesondere ist die Ausgabe des akustischen Signals bei der Implementierung des Verfahrens im Rahmen einer Einparkhilfe, eines Fußgängerschutzsystems und/oder eines Abstandswarners vorgesehen. Das akustische Signal wird bei Erreichen oder beim Unterschreiten des Schwellwerts für die Entfernung ausgegeben, so dass der Fahrer dazu veranlasst wird, unmittelbar auf die Gefahrensituation zu reagieren.

In vorteilhaften Ausgestaltungen der Erfindung wird der Unterbereich der Anzeigeeinrichtung derart angesteuert, dass die Ausgabe bezüglich der Sitzposition des Fahrers entsprechend der Richtung zu dem von der Umgebungsinformation beschriebenen Objekt erfolgt. Die Sitzposition des Fahrers definiert den Bezugspunkt der Ausgabe auf der Anzeigeeinrichtung. Insbesondere muss die Anzeigeeinrichtung in einem geringfügig abweichenden Unterbereich angesteuert werden, wenn sich die Sitzposition des Fahrers verändert. Somit kann sichergestellt werden, dass die Ausgabe der Umgebungsinformation entsprechend der korrekten Richtung, in der sich das Objekt bezüglich der Sitzposition befindet, erfolgt. Die Sitzposition wird beispielsweise mittels einer Sensorik erfasst, die Sitzeinstellungen, insbesondere bezüglich einer Fahrzeuglängs- und/oder Fahrzeugquerachse erfasst. Zusätzlich wird beispielsweise ein Neigungswinkel einer Rückenlehne erfasst, so dass die Sitzposition des Fahrers möglichst exakt ermittelt wird. Ferner kann die Erfassung der Sitzposition des Fahrers mittels einer fahrzeuginnenseitig angeordneten Kamera erfolgen, die die Sitzposition des Fahrers fortlaufend während der Fahrt erfasst.

Das erfindungsgemäß ausgestaltete Kraftfahrzeug ist zur Durchführung des Verfahrens zur Ansteuerung der Anzeigeeinrichtung ausgebildet. Für das Kraftfahrzeug gilt das für das Verfahren bereits Erläuterte entsprechend. Das Kraftfahrzeug umfasst die zumindest eine Anzeigeeinrichtung und das die Anzeigeeinrichtung ansteuernde Steuergerät. Die Umgebungsinformation ist dem Steuergerät zuführbar, welches zur Zuordnung der Richtungsinformation zur Umgebungsinformation entsprechende Mittel aufweist, die beispielsweise als Software implementiert sein können oder als integrierte Schaltungen ausgeführt sein können.

Vorteilhafterweise erstreckt sich die Anzeigeeinrichtung über den in der horizontalen Ebene liegenden Winkelbereich fahrzeuginnenseitig entlang der Fahrgastzelle. Gemäß vorteilhafter Ausgestaltungen der Erfindungen beträgt der Winkelbereich der Anzeigeeinrichtung zumindest 90°, 180° oder 270°. Die Anzeigeeinrichtung ist als optisches Ausgabegerät ausgeführt, insbesondere als Monitor oder als Display mit LC-Technologie (LC = liquid crystal), welches derart optisch hochauflösend ausgebildet ist, dass die winkelaufgelöste Darstellung der mit der Umgebungsinformation verknüpften Richtungsinformation ermöglicht ist.

In einem bevorzugten Ausbildungsbeispiel der Erfindung ist die Anzeigeeinrichtung von einer Vielzahl von nebeneinander angeordneten Anzeigeelementen gebildet. Die Anzeigeelemente sind insbesondere dem Fahrzeugfenster randseitig benachbart angeordnet und/oder im Bereich einer Fahrzeugtür, einer Fahrzeugsäule, insbesondere einer A-, B- oder C-Säule angeordnet. Die Anordnung zumindest eines Anzeigeelements im Bereich der Fahrzeugsäule ermöglicht insbesondere, dass anderweitig von der Fahrzeugsäule verdeckte Umgebungsinformation in dem dazu zugeordneten Unterbereich anzeigbar ist. Somit ist insbesondere im Bereich der Fahrzeugsäule das von der Bildgebungseinrichtung erfasste Bild anzeigbar, wobei das Bild zum Erfassungsbereich korrespondiert, der dem Bereich des toten Winkels entspricht. Der Bereich des toten Winkels, der wegen der Fahrzeugsäule nicht einsehbar ist, wird somit im Bereich der Fahrzeugsäule angezeigt, das Kraftfahrzeug wird somit im übertragenen Sinne für den Fahrer transparent gemacht, so dass insbesondere Kreuzungen leicht einsehbar sind.

Gemäß einem bevorzugten Ausführungsbeispiel der Erfindung weist die Anzeigeeinheit zusätzlich Mittel zur Ausgabe des akustischen Signals auf. Die Ausgabe des akustischen Signals ermöglicht die Warnung des Fahrers insbesondere bei besonders kritischen Fahrsituationen.

Vorzugsweise ist die Erfassungseinrichtung als optischer Sensor, als Radarsensor, als Lidar-Sensor und/oder als Ultraschallsensor ausgebildet. Radarsensoren sind insbesondere bei der Implementierung des Verfahrens zur Ansteuerung der Anzeigeeinrichtung in einem adaptiven Abstandswarnsystem vorgesehen. Bei Ausführungsbeispielen, welche als Einparkhilfen ausgeführt sind, ist die Verwendung von Ultraschallsensoren besonders vorteilhaft, da diese insbesondere im Nahbereich ein geeignetes Auflösevermögen aufweisen, um Objekte in der unmittelbaren Umgebung des Kraftfahrzeugs zuverlässig zu erkennen. Optische Sensoren finden insbesondere bei Fahrerassistenzsystemen, die zum Fußgängerschutz oder als Totwinkelassistent ausgebildet sind, Verwendung. Dabei können entsprechend erfasste Bilder von Bereichen toter Winkel angezeigt werden, die von einer Fahrzeugkomponente verdeckt sind.

Die weitere Erfassungseinheit erfasst die Fahrersitzposition fahrzeuginnenseitig. Dies kann beispielsweise dadurch geschehen, dass Sitzeinstellungen des Fahrersitzes elektronisch ausgelesen werden und dem Steuergerät zugeführt werden. Ferner ist die Fahrersitzposition mittels einer entsprechenden Sensorik erfassbar, die die Verschiebung des Fahrersitzes insbesondere parallel zu einer Fahrzeuglängs-, Fahrzeugquer- und/oder Fahrzeughochachse erfasst.

In einem besonders bevorzugten Ausführungsbeispiel wird die Sitzposition des Fahrers mittels einer Kamera fortlaufend während der Fahrt erfasst. Damit ist es ermöglicht, dass auch geringfügige Veränderungen der Sitzposition erfassbar sind, wie beispielsweise einer geringfügigen Veränderung der Haltung des Oberkörpers des Fahrers, so dass der Bezugspunkt, bezüglich dessen die Umgebungsinformation im Unterbereich der Anzeigeeinrichtung ausgegeben wird, exakt ermittelbar ist.

Weitere Vorteile und Einzelheiten der Erfindung werden im Folgenden anhand von Ausführungsbeispielen und unter Bezugnahme auf die Zeichnungen erläutert. Dabei zeigen:
- Fig. 1: ein erfindungsgemäßes Kraftfahrzeug, das zur Durchführung des erfindungsgemäßen Verfahrens ausgebildet ist und eine Anzeigeeinrichtung aufweist, die sich über einen in einer horizontalen Ebene liegenden Winkelbereich von zumindest 90° erstreckt,
- Fig. 2: ein weiteres Ausführungsbeispiel des Kraftfahrzeugs mit einer Anzeigeeinrichtung, die sich über einen Winkelbereich von zumindest 180° erstreckt,
- Fig. 3: ein weiteres Ausführungsbeispiel des Kraftfahrzeugs mit einer Anzeigeeinrichtung, dessen Winkelbereich sich über 360° erstreckt,
- Fig. 4: eine perspektivische Ansicht eines frontseitigen Bereichs eines Fahrzeuginnenraums,
- Fig. 5: schematisch die Darstellung einer Umgebungsinformation gemäß einem Ausführungsbeispiel eines Verfahrens zur Ansteuerung der Anzeigeeinrichtung, und
- Fig. 6: schematisch die Darstellung der Umgebungsinformation gemäß einem weiteren Ausführungsbeispiel des Verfahrens zur Ansteuerung der Anzeigeeinrichtung.

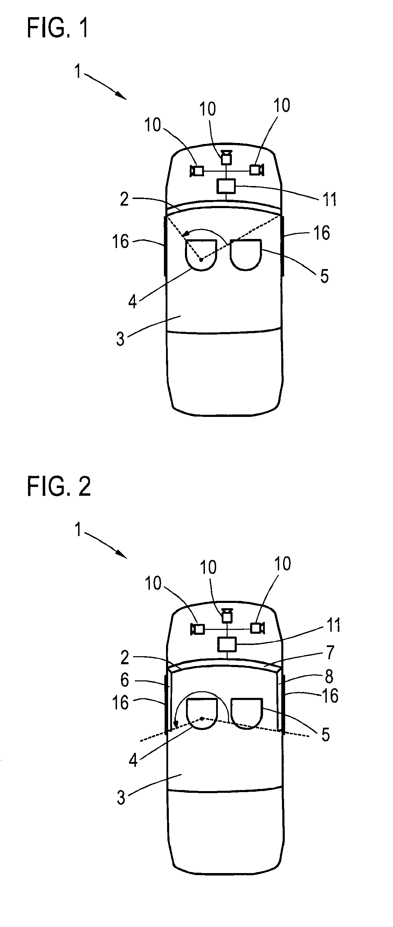

Fig. 1 zeigt ein Kraftfahrzeug 1, welches eine Anzeigeeinrichtung 2 aufweist, die einen Fahrzeuginnenraum oder eine Fahrgastzelle 3 teilweise randseitig umlaufend angeordnet ist. Dabei erstreckt sich die Anzeigeeinrichtung 2 über einen Winkelbereich, der in einer horizontalen Ebene senkrecht zu einer Fahrzeughochachse liegt und sich über geringfügig mehr als 90° erstreckt. Dabei ist die Ausdehnung des Winkelbereichs bezüglich eines Bezugspunkts definiert, der von einer Sitzposition eines Fahrers, welcher auf einem Fahrersitz 4 Platz nimmt, bestimmt ist. Die Anzeigeeinrichtung 2 ist als LC-Display ausgeführt und an einer Frontscheibe des Kraftfahrzeugs 1 randseitig angeordnet ist. Die Anzeigeeinrichtung 2 erstreckt sich dabei über eine gesamte Fahrzeugbreite, so dass Umgebungsinformationen, welche auf der Anzeigeeinrichtung 2 angezeigt werden, auch für einen auf einen Beifahrersitz 5 befindlichen Fahrgast wahrnehmbar sind.

Fig. 2 zeigt ein zweites Ausführungsbeispiel des Kraftfahrzeugs 1, welches eine Anzeigeeinrichtung 2 aufweist, die sich über einen in einer horizontalen Ebene liegenden Winkelbereich erstreckt, der sich bezüglich der Sitzposition des Fahrers über geringfügig mehr als 180° erstreckt. Die Anzeigeeinrichtung 2 ist von drei Anzeigeelementen 6, 7, 8 gebildet, wobei sich die Anzeigeelemente 6, 8 zumindest teilweise über eine Breite einer Fahrzeugtür 16 erstrecken.

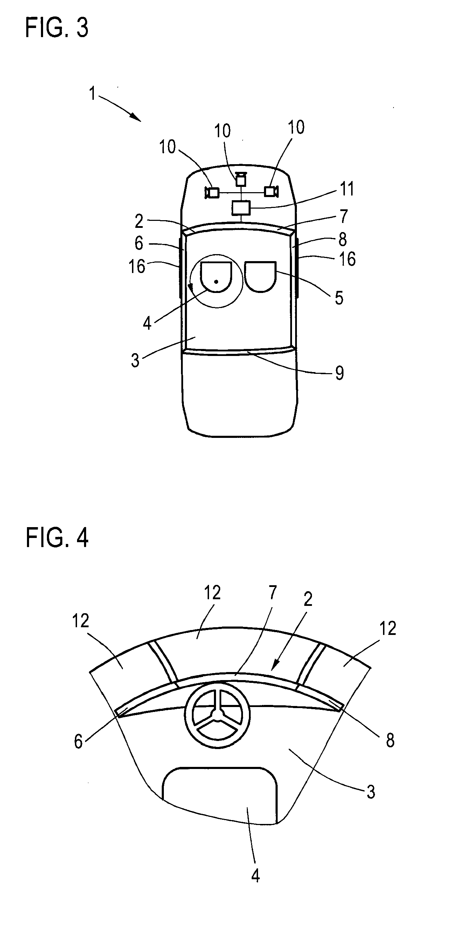

Fig. 3 zeigt ein drittes Ausbildungsbeispiel des Kraftfahrzeugs 1, wobei eine Anzeigeeinrichtung 2 vorgesehen ist, die die gesamte Fahrgastzelle 3 randseitig umläuft. Dabei ist die Anzeigeeinrichtung 2 abschnittsweise von Anzeigeelementen 6, 7, 8, 9 gebildet.

Die in den Figuren 1 - 3 gezeigten Ausführungsbeispiele der Erfindung weisen entsprechende Erfassungseinrichtungen 10 auf, mittels deren die auf die Umgebung des Kraftfahrzeugs 1 bezogene Umgebungsinformation erfassbar ist. Die Erfassungseinrichtungen 10 stehen in einer Wirkverbindung mit einem Steuergerät 11, welches zur Ansteuerung der Anzeigeeinrichtung 2 ausgebildet ist. Dabei ist das Steuergerät 11 derart ausgebildet, dass in Abhängigkeit einer Richtungsinformation, die der Umgebungsinformation zuordbar ist, die Anzeigeeinrichtung zur Darstellung der Umgebungsinformation in einem der Richtungsinformation zugeordneten Unterbereich 15 des Winkelbereichs ansteuerbar ist.

Ferner ist nicht dargestellter Weise eine weitere Erfassungseinrichtung vorgesehen, mittels der die Sitzposition des Fahrers erfassbar ist. Dies erfolgt mittels einer als Kamera ausgebildeten weiteren Erfassungseinrichtung. Die Sitzposition des Fahrers legt den Bezugspunkt fest, bezüglich dessen eine Richtung 14 eines in der Umgebung des Kraftfahrzeugs befindlichen Objekts 13 bestimmt wird. Die Richtung 14 entspricht dem angesteuerten Unterbereich 15 der Anzeigeeinrichtung. Somit ist mittels der optischen Erfassung der Sitzposition des Fahrers der Bezugspunkt und damit die korrekte Anzeige der Umgebungsinformation im Unterbereich 15 der Anzeigeeinrichtung auf die aktuelle Sitzposition des Fahrers anpassbar.

Fig. 4 zeigt in einer perspektivischen Ansicht einen frontseitigen Bereich der Fahrgastzelle 3. Die Anzeigeeinrichtung 2, die durch die Anzeigeelemente 6, 7, 8 gebildet ist, umläuft die Fahrgastzelle 3 teilweise. Dabei sind die Anzeigeelemente 6, 7, 8 randseitig an Fahrzeugfenstern 12 angeordnet, so dass die auf der Anzeigeeinrichtung 2 dargestellte Umgebungsinformation sich bei normalem Betrieb im peripheren Sichtfeld des Fahrers befindet.

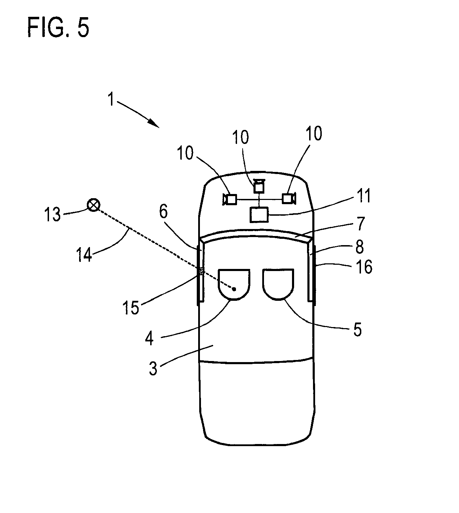

Fig. 5 zeigt die Anzeige der Umgebungsinformation auf der Anzeigeeinrichtung 2 gemäß dem Verfahren zur Ansteuerung der Anzeigeeinrichtung 2. Dabei wird ein Objekt 13 mittels einer der Erfassungseinrichtungen 10 erfasst. Die Richtung 14, die die Lage des Objekts 13 bezüglich des Bezugspunkts, der von der Sitzposition des Fahrers definiert ist, entspricht dem Unterbereich 15 der zur Darstellung der Umgebungsinformation auf der Anzeigeeinrichtung 2 angesteuert wird. Somit ist die Darstellung der Umgebungsinformation auf der Anzeigeeinrichtung 2 dergestalt, dass der Fahrer die dargestellte Umgebungsinformation unter einem Winkel wahrnimmt, die der tatsächlichen Richtung 14 des Objekts 13 entspricht.

In dem in Fig. 5 dargestellten Beispiel ist das Objekt 13 ein Fußgänger, der sich in der Umgebung des Kraftfahrzeugs 1 befindet. Die Anzeige erfolgt situationsspezifisch als zeitlich veränderliche, blinkende Darstellung der Umgebungsinformation in Form eines abstrahierten Fußgängersymbols, so dass die ausgegebene Umgebungsinformation vom Fahrer deutlich wahrnehmbar ist. Unbeachtet davon, ob sich das Objekt 13 in einem Bereich befindet, der von einer Fahrzeugkomponente, wie einer A-Säule, verdeckt ist, ermöglicht die Ansteuerung des Unterbereichs 15 korrespondierend zu der korrekten Richtung 14 eine besonders intuitive Warnung des Fahrers. Der angesteuerte Unterbereich 15 korrespondiert zu der Richtung 14, aus der sich eine Gefahr dem Kraftfahrzeug 1 nähert.

Zusätzlich wird eine Entfernung des Objekts 13 zu dem Kraftfahrzeug 1 mittels einer der Erfassungseinrichtungen 10 erfasst. Überschreitet die Entfernung einen vorgegebenen oder vorgebbaren Schwellwert, so erfolgt die Anzeige der Umgebungsinformation im Unterbereich in grün, so dass der Fahrer davon informiert ist, dass keine unmittelbare Kollisionsgefahr besteht. Unterschreitet jedoch die Entfernung des Objekts 13 zu dem Kraftfahrzeug den vorgegebenen oder vorgebbaren Schwellwert, so erfolgt die Anzeige der Umgebungsinformation im Unterbereich 15 in rot, um den Fahrer vor der unmittelbaren Kollisionsgefahr zu warnen. Zusätzlich wird bei Unterschreiten des Schwellwerts ein akustisches Signal zur Warnung des Fahrers ausgegeben. Dazu ist die Anzeigeeinrichtung 2 in nicht näher dargestellter Art und Weise mit einem entsprechenden Mittel zur Ausgabe des akustischen Signals ausgestattet.

Bei Entfernungen, die den Schwellwert nicht unterschreiten, jedoch nur geringfügig größer sind als der Schwellwert, so dass eine Kollisionsgefahr nicht ausgeschlossen werden kann, erfolgt die Anzeige der Umgebungsinformation im Unterbereich beispielsweise in orange.

Das Verfahren stellt eine winkelaufgelöste Anzeige der Umgebungsinformation dar, die auf besonders intuitive Weise ermöglicht, die der Umgebungsinformation zugeordnete Richtungsinformation darzustellen. Die Farbcodierung der angezeigten Umgebungsinformation ermöglicht hierbei auf besonders vorteilhafte Weise, die Entfernung zu dem Objekt 13 in intuitiv leicht erfassbarer Weise anzugeben. Somit ist das Verfahren zur Ansteuerung der Anzeigeeinrichtung 2 des Kraftfahrzeugs 1 besonders dazu geeignet, in einem Fahrerassistenzsystem implementiert zu werden, das als Fußgängerschutzsystem, als Einparkhilfe oder als Abstandswarner ausgebildet ist.

In einem alternativen Ausführungsbeispiel ist das Verfahren zur Ansteuerung der Anzeigeeinrichtung 2 im Rahmen eines Spurwechselassistenten implementiert. Dabei wird im Unterbereich 15 das Objekt 13, welches ein auf einer benachbarten Fahrspur befindliches Fahrzeug beschreibt, derart angezeigt, dass der angesteuerte Unterbereich 15 vom Fahrer unter einem Winkel wahrgenommen wird, welcher der Richtung 14 entspricht. Bewegt sich das Objekt 13 bezüglich des Kraftfahrzeugs 1 und/oder bezüglich der Sitzposition des Fahrers, so wird die Anzeige entsprechend angepasst und gegebenenfalls ein anderer Unterbereich 15 der Anzeigeeinrichtung 2 angesteuert. Dies ermöglich in besonders vorteilhafter Weise eine Blickführung des Fahrers, so dass die Gefahr eines Unfalls, welcher aus Unaufmerksamkeit des Fahrers resultiert, minimiert wird.

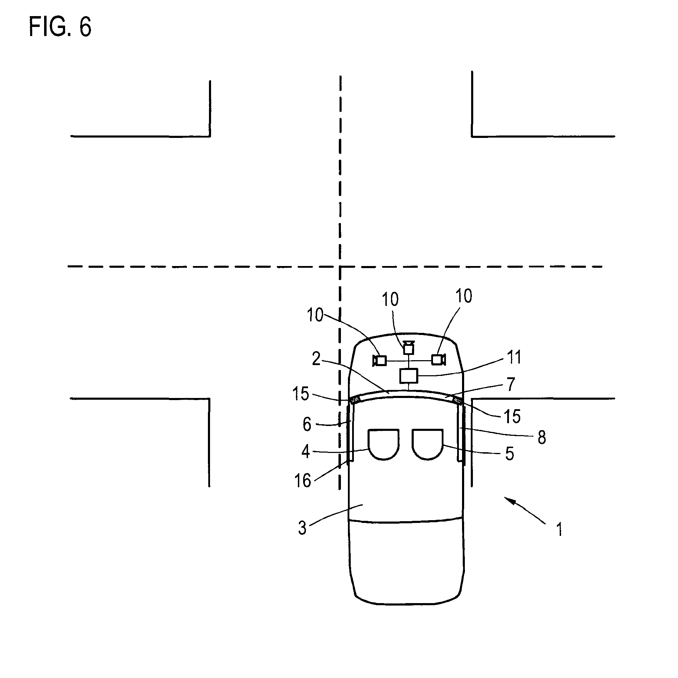

Fig. 6 zeigt ein weiteres Ausbildungsbeispiel der Erfindung, bei dem sich das Kraftfahrzeug 1 einer Kreuzung nähert. Die als optische Bildgebungseinrichtungen ausgeführten Erfassungseinrichtungen 10 sehen vom Kraftfahrzeug 1 aus in den linksseitigen und in den rechtsseitigen Straßenverlauf ein, bevor diese Bereiche von dem Fahrer selbst einsehbar sind. Die dabei erzeugten Bilder werden in Unterbereichen 15 angezeigt, die entsprechend in einer vorderseitigen Ecke der Fahrgastzelle 3 links- bzw. rechtsseitig angeordnet sind. Die Darstellung der Umgebungsinformation in den Unterbereichen 15 ermöglicht somit die winkel- und richtungsaufgelöste Wahrnehmung von Umgebungsinformationen, die anderweitig von der A-Säule des Kraftfahrzeugs 1 verdeckt wären. Die Darstellung der Umgebungsinförmation in den Unterbereichen 15 entspricht jeweiligen Erfassungsbereichen der optischen Erfassungseinrichtungen 13.

## Patentansprüche

1. Verfahren zur Ansteuerung einer Anzeigeeinrichtung (2) eines Kraftfahrzeugs (1) zur Anzeige einer auf die Umgebung des Kraftfahrzeugs (1) bezogenen Umgebungsinformation,
wobei der Umgebungsinformation wenigstens eine eine Erfassungsrichtung einer zur Ermittlung der Umgebungsinformation genutzten Erfassungseinrichtung (10) oder eine Richtung (14) zu einem von der Umgebungsinformation beschriebenen Objekt (13) ausgehend von einem Bezugspunkt, insbesondere einer Sitzposition eines Fahrers, innerhalb des Kraftfahrzeugs (1) beschreibende Richtungsinformation zugeordnet wird, wobei die sich über wenigstens einen in einer horizontalen Ebene liegenden Winkelbereich erstreckende Anzeigeeinrichtung (2) zur Darstellung der Umgebungsinformation in einem der Richtungsinformation zugeordneten Unterbereich (15) des Winkelbereichs angesteuert wird,
**dadurch gekennzeichnet,**
**dass** als Erfassungseinrichtung (10) eine Bildgebungseinrichtung mit einem die Erfassungsrichtung definierenden Erfassungsbereich verwendet wird und die Umgebungsinformation das, gegebenenfalls nachbereitete, erfasste Bild ist.

2. Verfahren nach Anspruch 1,
**dadurch gekennzeichnet,**
**dass** der Unterbereich (15) der Richtung (14) entspricht.

3. Verfahren nach einem der vorangehenden Ansprüche,
**dadurch gekennzeichnet,**
**dass** die Anzeigeeinrichtung (2) zu einer zeitlich veränderlichen Darstellung der Umgebungsinformation angesteuert wird, insbesondere zu einer blinkenden Darstellung der Umgebungsinformation.

4. Verfahren nach einem der vorangehenden Ansprüche,
**dadurch gekennzeichnet,**
**dass** bei einer ein Objekt (13) betreffenden Umgebungsinformation auch eine Entfernung des Objekts (13) zu einer äußeren Begrenzung des Kraftfahrzeugs (1) und/oder einem festen Bezugspunkt des Kraftfahrzeugs (1) ermittelt wird, wobei die Anzeige der Umgebungsinformation in Abhängigkeit der Entfernung angepasst wird, insbesondere farbcodiert wird.

5. Verfahren nach einem der vorangehenden Ansprüche,
**dadurch gekennzeichnet,**
**dass**, insbesondere bei Erfüllung einer zusätzlichen Bedingung, ein akustisches Signal zusätzlich zu der Darstellung der Umgebungsinformation ausgegeben wird.

6. Verfahren nach Anspruch 4 oder 5,
**dadurch gekennzeichnet,**
**dass** als zusätzliche Bedingung das Erreichen oder Unterschreiten eines vorgegebenen oder vorgebbaren Schwellwerts für die Entfernung des Objekts (13) zu der äußeren Begrenzung des Kraftfahrzeugs (1) und/oder dem Bezugspunkt des Kraftfahrzeugs (1) definiert wird.

7. Verfahren nach einem der vorangehenden Ansprüche,
**dadurch gekennzeichnet,**
**dass** die den Bezugspunkt definierende Sitzposition des Fahrers kraftfahrzeugseitig erfasst wird und eine Änderung der Sitzposition eine entsprechende Änderung der Richtungsinformation bewirkt.

8. Kraftfahrzeug (1), umfassend wenigstens eine Anzeigeeinrichtung (2) und ein die Anzeigeeinrichtung (2) ansteuerndes Steuergerät (11), welches zur Durchführung eines Verfahrens nach einem der vorangehenden Ansprüche ausgebildet ist.

9. Kraftfahrzeug (1) nach Anspruch 8,
**dadurch gekennzeichnet,**
**dass** der Winkelbereich, über welchen sich die Anzeigeeinrichtung (2) erstreckt, zumindest 90°, 180° oder 270° beträgt.

10. Kraftfahrzeug (1) nach Anspruch 8 oder 9,
**dadurch gekennzeichnet,**
**dass** die Anzeigeeinrichtung (2) von einer Vielzahl von nebeneinander angeordneten Anzeigeelementen (6, 7, 8, 9) gebildet ist.

11. Kraftfahrzeug (1) nach einem der Ansprüche 8 bis 10,
**dadurch gekennzeichnet,**
**dass** die Anzeigeeinrichtung (2) zusätzlich Mittel zur Ausgabe eines akustischen Signals aufweist.

12. Kraftfahrzeug (1) nach einem der einem der Ansprüche 8 bis 11, **dadurch gekennzeichnet,**
**dass** die Erfassungseinrichtung (10) ein optischer Sensor, ein Radarsensor und/oder ein Ultraschallsensor ist.

13. Kraftfahrzeug (1) nach einem der einem der Ansprüche 8 bis 12, **dadurch gekennzeichnet,**
**dass** eine weitere Erfassungseinrichtung die Fahrersitzposition fahrzeuginnenseitig erfasst.

14. Kraftfahrzeug (1) nach Anspruch 13,
**dadurch gekennzeichnet, dass** die weitere Erfassungseinrichtung als optische Erfassungseinrichtung, insbesondere als Kamera, ausgebildet ist.
